# EUROPÄISCHE PATENTANMELDUNG

(11) **EP 1 179 295 A1**
(43) Veröffentlichungstag der Anmeldung: **13.02.2002**
(21) Anmeldenummer: 01115425.9
(22) Anmeldetag: 27.06.2001
(51) Int. Cl.: A01F 15/14

(54) **Bindevorrichtung für Rundballenpressen**

(30) Priorität: 08.08.2000 DE 10038591
(71) Anmelder: DEERE & COMPANY, Moline, Illinois 61265-8098 (US)
(72) Erfinder: Roth, Arsène, 70100 Gray (FR)
(74) Vertreter: Magin, Ludwig Bernhard

(57) **Zusammenfassung**

2.1. Bekannte Bindevorrichtungen von Rundballenpressen legen Bindegarn auf die Oberfläche des Rundballens auf und ziehen es fest. Sobald der so gebundene Rundballen den Preßraum verläßt, können lose Garnenden von dem Rundballen herab fallen.
2.2. Es wird vorgeschlagen, auf die Oberfläche des Preßerzeugnisses (40) zugelegene benachbarte Stränge (42) des Bindemittels (44) miteinander zu verdrillen, so daß sie eine unrunde Querschnittsform bilden und sich gegeneinander verkeilen, so daß sie sich nicht von der Oberfläche des Preßerzeugnisses (40) lösen.
2.3. Bindevorrichtungen (32) werden an landwirtschaftlich benutzten Pressen verwendet.

## Beschreibung

Die Erfindung betrifft eine Bindevorrichtung einer Presse mit einer Bindemittelquelle, von der aus wenigstens zwei Stränge Bindemittel zu einem Preßerzeugnis geführt werden, und eine Rundballenpresse.

In einer Rundballenpresse gebildete Rundballen werden gebunden, indem eine Schnur vielfach um den Rundballen geschlungen wird, wobei das Schnurende lose auf dem Ballen aufliegt, soweit es nicht in der Oberfläche des Preßguts oder zwischen darunterliegendem Bindemittel gehalten wird.

Es ist ein bekanntes Problem, daß sich die Schnur vom Ende her bei der Handhabung des Rundballens löst und abrollt, was zu einem Verfangen der Schnur z. B. mit Geräten und zu einer Auflösung des Rundballens führen kann.

Eine Lösung dieses Problems gemäß der EP-A2-0 159 953 sieht vor, in die Oberfläche des Rundballens eine Klammer zum Halten der Garnenden einzustecken. Eine solche Lösung hat den Nachteil, daß einerseits die Klammer relativ hart sein muß, um in eine feste Oberfläche eindringen zu können, andererseits aber nicht zu Problemen führen darf, wenn Vieh eine solche Klammer verschluckt.

Es ist ferner bekannt, lose Garnenden in die Oberfläche des Rundballens mittels Rädern hineinzudrücken, sh. z. B. DE 41 32 664, EP 980 646, was jedoch einen größeren technischen Aufwand bedarf.

Gemäß der EP 858 734 ist vorgesehen, in die Oberfläche des Rundballens eine Nut einzuschneiden, in die die Bindemittelenden eingelegt und darin gehalten werden sollen. Hierbei erweist es sich als problematisch, daß eine ausreichende Haltekraft erst bei einer größeren Nuttiefe auftritt.

Ferner wird vorgeschlagen, während des Preßvorgangs den Rundballen in der Rundballenpresse in der Ausrollrichtung zu drehen, so daß das Bindemittel während des Ausrollens nicht herabfällt. Bei Rundballenpressen dieser Art kann jedoch nicht verhindert werden, daß das Bindemittel bei der späteren Handhabung des Rundballens herabfällt.

Das der Erfindung zugrunde liegende Problem wird darin gesehen, daß die bekannten Lösungen entweder technisch zu aufwendig oder nicht zuverlässig genug sind.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise erfährt ein aus zwei Strängen gebildeter Gesamtstrang eine unrunde Oberfläche im wesentlichen in der Form einer "8", die sich leichter in der Oberfläche verhakt, als eine runde, glatte Schnur.

Die Verdrehung oder Verdrillung der Stränge kann grundsätzlich manuell und/oder durch entsprechende Strangführungen erreicht werden; aber eine antreibbare Verdrehvorrichtung erbringt eine schnellere, einfachere und zuverlässigere Verdrehung, wodurch der Eintritt der erfinderischen Wirkung in hohem Maß sichergestellt wird.

Wenn die Verdrehvorrichtung nur zeitweise angetrieben wird, ist es möglich, den Verdrehbetrieb erst zum Ende des Bindevorgangs aufzunehmen, während ansonsten zwei Stränge parallel zueinander auf das Preßerzeugnis, insbesondere einen Rundballen, aufgelegt werden können, was den Bindevorgang beschleunigt.

Eine einfache Weise, zwei oder mehrere sich bewegende Stränge miteinander zu verdrehen, besteht in der Verwendung gegenläufig angetriebener Mitnehmer, die die Stränge quasi wie zwischen zwei gegensätzlich bewegten Handflächen rollt.

Um den Verdrehbetrieb aufzunehmen oder um die Stränge zu erfassen, sind die Mitnehmer relativ zueinander verstellbar und können z. B. in einer geweiteten Stellung die Stränge erfassen oder leiten und in einer geschlossenen Stellung die Stränge aneinander anlegen und aufeinander aufrollen.

Heute sind Antriebe als Elektro-, Hydraulik- oder Pneumatikmotor kostengünstig verfügbar und erbringen bei kleinen Baumaßen hohe Leistungen. Folglich ist es sinnvoll, derartige motorische Antriebe zu benutzen und dadurch die Funktion der Verdrehvorrichtung sicherzustellen. Mechanische Antriebe, die ihre Antriebskraft von der Bewegung der Stränge ableiten, müßten womöglich aufwendiger ausgebildet werden, um dieselbe Zuverlässigkeit zu erreichen.

Als Mitnehmer kommen Riemen oder Schnüre oder Ringe oder Rollen in Betracht, d. h. Mittel, die sich entweder selbst drehen oder um zwei Räder oder Rotoren herumgeschlungen werden und von einem dieser mitgenommen werden. Mit der erhöhten Oberflächenreibung wird die Verdrehung der Stränge sichergestellt.

Wenn mehrere Mitnehmer vorhanden sind, reicht dennoch ein Antrieb aus, wenn dessen Antriebskraft mittels eines Getriebes auf die Mitnehmer übertragen wird.

Wenn zwei als Riemen, Schnüre oder Ringe ausgebildete Mitnehmer um einen gemeinsamen Antriebsrotor geschlungen sind, wird nur ein Rotor und ein Antriebsmotor benötigt, und die Mitnehmer können z. B. in V-Form aneinander ausgerichtet werden und einen Zwickel zwischen sich bilden, in den die Stränge eintreten und erfaßt werden.

Nach einer alternativen Ausführungsform ist vorgesehen, daß zwei als Rollen ausgebildete Mitnehmer drehbar in einem Träger gelagert sind, zwischen sich einen Abstand zur Bildung eines Spalts belassen und ein weiterer Mitnehmer den Spalt einerseits begrenzt. Danach sind beiderseits einer V-förmigen Aufnahmeöffnung Mitnehmer vorgesehen, die jeweils die Stränge erfassen und miteinander verdrehen.

Alternativ zu dem Motor oder einer fremdkraftbetriebenen Antriebsquelle überhaupt, kann der Antrieb auch von dem sich bewegenden Garn abgeleitet werden. Das Bindemittel kann über oder um ein Rad geführt werden und dieses in Drehung versetzen, wenn es von dem Ballen aus der Bindemittelquelle abgezogen wird. Diese Drehbewegung kann mittels einer biegsamen Welle auf die Verdrehvorrichtung übertragen werden. In diesem Fall sind auch keine Schalter erforderlich, weil der Antrieb der Verdrehvorrichtung automatisch dann endet, wenn das Bindemittel getrennt wird.

Eine Rundballenpresse ist dann optimal ausgebildet, wenn sich die Verdrehvorrichtung zwischen der Bindemittelführung und dem Preßraum der Rundballenpresse und somit vor oder hinter einer Schneidvorrichtung für die Stränge vorgesehen ist. Insbesondere beim Eintreten in die Schneidvorrichtung werden die Stränge zusammengeführt und können somit problemlos von der Verdrehvorrichtung erfaßt werden.

In der Zeichnung sind nachfolgend näher beschriebene Ausführungsbeispiele der Erfindung dargestellt. Es zeigt:
- Fig. 1: eine Presse in Seitenansicht und in schematischer Darstellung,
- Fig. 2: die Presse aus Figur 1 in Umrissen mit einer erfindungsgemäßen Bindevorrichtung und einem Preßerzeugnis,
- Fig. 3a: eine Verdrehvorrichtung der Bindevorrichtung nach einem ersten Ausführungsbeispiel in einer Aufnahmestellung,
- Fig. 3b: die Verdrehvorrichtung aus Figur 3a in einer Verdrehstellung,
- Fig. 4a: eine Verdrehvorrichtung der Bindevorrichtung nach einem zweiten Ausführungsbeispiel in einer Aufnahmestellung,
- Fig. 4b: die Verdrehvorrichtung aus Figur 4a in einer Verdrehstellung und
- Fig. 5: eine Verdrehvorrichtung der Bindevorrichtung nach einem dritten Ausführungsbeispiel.

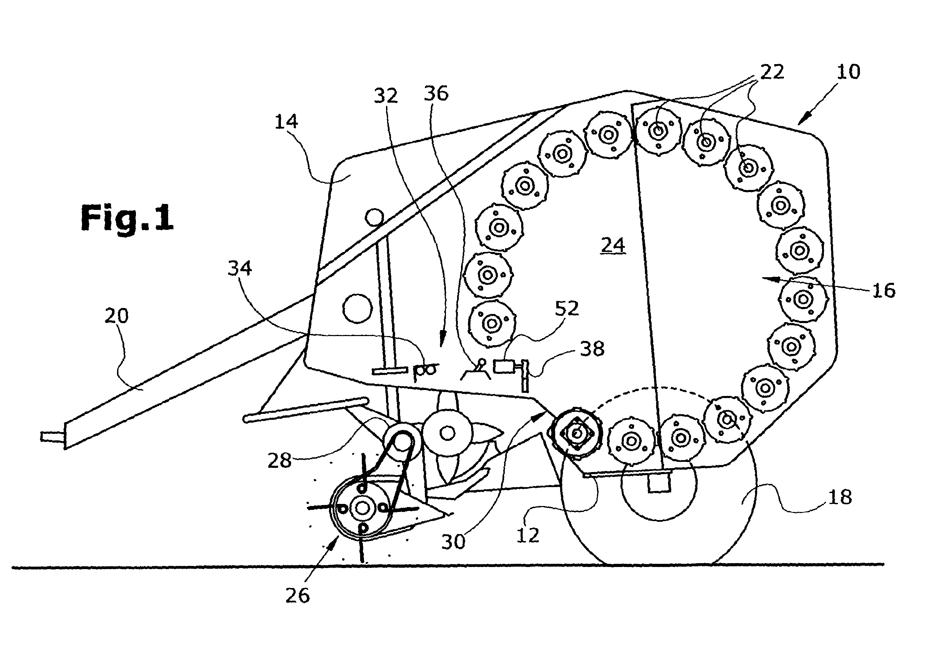

Eine als Rundballenpresse ausgebildete Presse 10 gemäß Figur 1 enthält einen Rahmen 12, der eine vordere Gehäusehälfte 14 und eine rückwärtige Gehäusehälfte 16 aufweist, die sich über Räder 18 auf dem Boden abstützen und mittels einer Deichsel 20 an ein Zugfahrzeug, z. B. einen Ackerschlepper angeschlossen werden können.

In dem Rahmen 12 sind auf einem Kreisbogen eine Vielzahl von Preßwalzen 22 angeordnet, die umfangsseitig einen Preßraum 24 umgeben. Dem Preßraum 24 ist eine Aufnahmeeinrichtung 26, eine sog. Pick-Up, vorgelagert, die Erntegut vom Boden aufnimmt und es nach hinten in den Preßraum 24 fördert. In diesem Ausführungsbeispiel ist zwischen der Aufnahmevorrichtung 26 und dem Preßraum 24 ein Schneidwerk 28 vorgesehen, was jedoch nicht zwingend ist. Die Einführung des Preßguts in den Preßraum 24 erfolgt über eine Eingangsöffnung 30, die dadurch gebildet wird, daß eine oder mehrere der Preßwalzen 22 ausgelassen werden.

Oberhalb des Schneidwerks 28 befindet sich eine Bindevorrichtung 32, die eine Bindemittelführung 34, eine Schneidvorrichtung 36 und eine Verdrehvorrichtung 38 enthält.

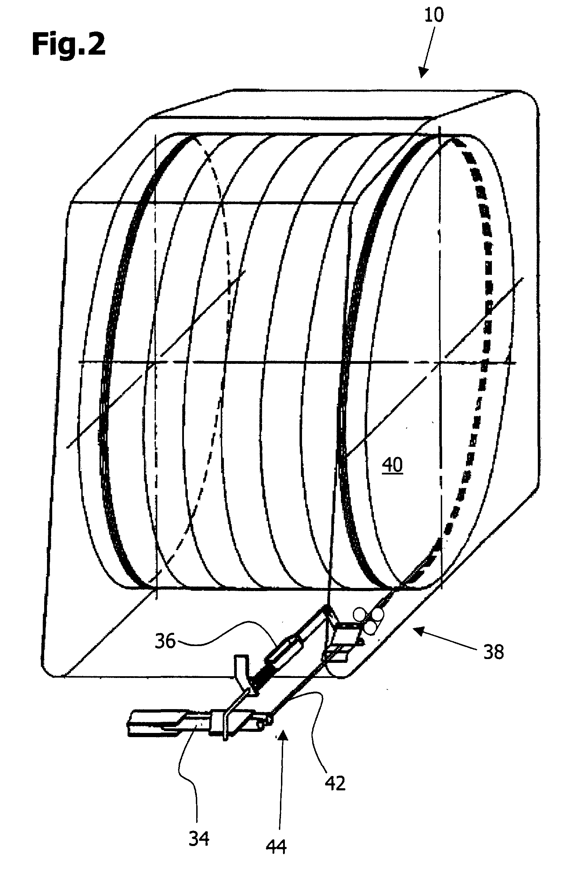

Figur 2 zeigt die Presse 10 nur in Umrissen und mit einem als Rundballen ausgebildeten Preßerzeugnis 40 in seinem Inneren, d. h. seinem Preßraum 24. Gemäß der Darstellung in Figur 2 wird Bindemittel 44, z. B. Schnur aus Kunststoff oder Sisal, auf das sich in dem Preßraum 24 drehende Preßerzeugnis 40 gelegt und umschließt dieses endlich spiralförmig. Das Bindemittel 44 wird von einer nicht gezeigten Bindemittelquelle, z. B. von Rollen, abgezogen. Dabei werden zwei oder mehr Stränge 42 parallel auf die Oberfläche des Preßerzeugnisses 40 aufgelegt. Am Ende des Bindevorgangs befindet sich das freie Ende der doppelten Bindemittelführung 34 im Bereich einer Stirnfläche des Preßerzeugnisses 40, und die beiden Stränge 42 gelangen in unmittelbare Anlage aneinander. In dieser Endstellung verharrt die Bindemittelführung 34 in ihrer Stellung, und das Preßerzeugnis 40 wird weiterhin in dem Preßraum 24 von den Preßrollen 22 gedreht, so daß nahe der betreffenden Stirnseite mehrere Lagen des Bindemittels 44 nebeneinander und aufeinander zu liegen kommen. Anstelle einer einzigen Bindemittelführung 34 mit zwei Auslässen können auch zwei Bindemittelführungen vorgesehen werden, die eine benachbarte Endstellung einnehmen, in der die jeweiligen Stränge 42 aneinander anliegen. Die Ausführungsform dieser Erfindung ist nicht auf eine Bindemittelführung 34 in der Art eines dargestellten Bindearms 34 beschränkt; vielmehr können auch andere Arten der Bindemittelführung, z. B. mit Schlitten oder dergleichen gewählt werden.

Die Schneidvorrichtung 36 ist so angeordnet, daß sich die Stränge 42 in sie einlegen, wenn sich die Bindemittelführung 34 in ihrer Endstellung befindet. In bekannter Ausführung werden die Stränge 42 zum Trennen in der Schneidvorrichtung 36 fest gehalten und an einer scharfen Kante abgerissen oder abgeschert. Während dieses Trennvorgangs entstehen in den Strängen 42 hohe Zugkräfte, die bewirken, daß sich die äußeren Lagen der Stränge 42 zwischen die darunterliegenden Lagen klemmen.

Die Beschreibung bis hierher entspricht der einer herkömmlichen landwirtschaftlichen Rundballenpresse. Selbstverständlich kann es sich aber auch um andere Pressen, insbesondere Rundballenpressen, handeln z. B. um solche mit einem größenvariablen Preßraum mit Riemen, Ketten oder Walzen oder einer Kombination aus diesen Förderelementen. Es können auch andere Güter gepreßt werden, wie Müll, Baumwolle, Kleider, Gehölz, etc.

Die weitere Beschreibung bezieht sich auf die Verdrehvorrichtung 38, die in drei Ausführungsbeispielen dargestellt ist.

Allen Ausführungsbeispielen ist gemeinsam, daß sie einen oder mehrere Halter 46, mehrere Rotoren 48, mehrere Mitnehmer 50 und wenigstens einen Motor 52 aufweisen.

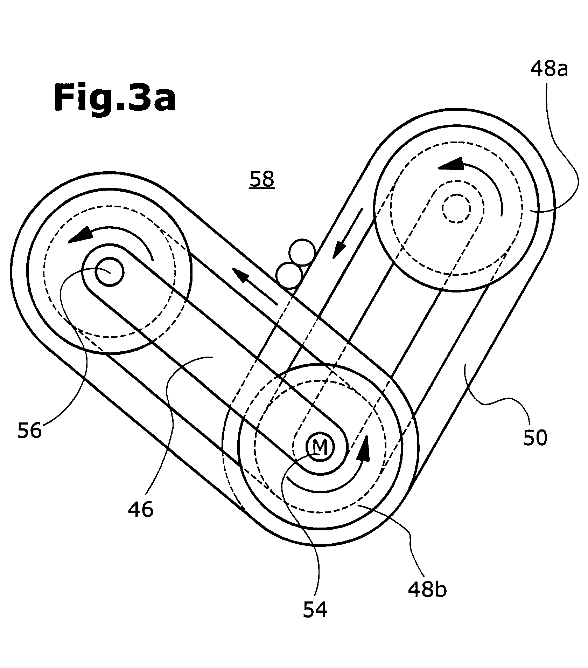

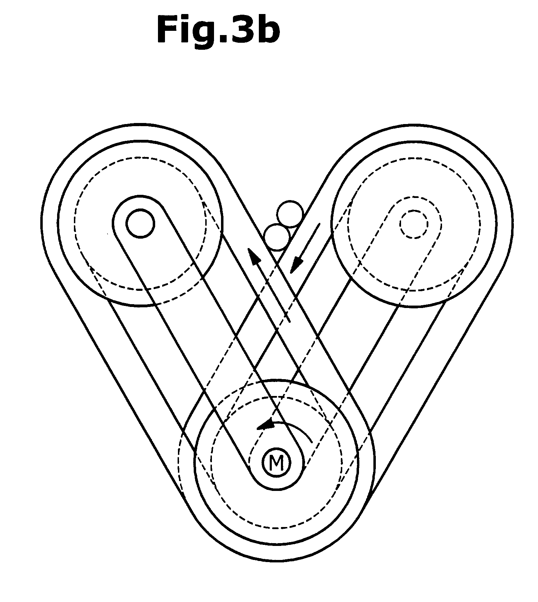

Gemäß den Figuren 3a und 3b des ersten Ausführungsbeispiels sind zwei Halter 46 vorgesehen, die als Lenker ausgebildet sind und auf einer Achse 54 eines mittigen Rotors 48b schwenkbar gelagert sind; grundsätzlich ist es aber schon vorteilhaft, wenn nur einer der Halter 46 schwenkbar ist. Tatsächlich ist eine Schwenkbarkeit nicht erforderlich, wie das dritte Ausführungsbeispiel zeigt. Die Halter 46 sind einenends auf der Achse 54 gelagert und tragen anderenends einen nicht angetriebenen, umlenkenden Rotor 48a in der Art einer Rolle oder Scheibe, wozu jeweils eine Achse 56 vorgesehen ist. Beide Halter 46 sind in diesem Ausführungsbeispiel gleich lang ausgebildet, was jedoch nicht erforderlich ist.

Die Achse 54 ist sowohl mit dem Rotor 48b als auch mit dem Motor 52 drehfest verbunden. Der Rotor 48b ist somit ein angetriebener Rotor 48. Allerdings muß sich dieser Rotor 48b nicht mittig zwischen den nicht angetriebenen Rotoren 48a befinden; vielmehr könnte er auch an einem freien Ende der Halter 46 angeordnet sein. Die Rotoren 48 sind in dem gewählten Ausführungsbeispiel gleich groß ausgebildet, was jedoch nicht zwingend ist; insbesondere könnten die außenliegenden Rotoren 48a größer sein als der mittige angetriebene Rotor 48b. Bei den Rotoren 48a handelt es sich um Räder, z. B. aus Kunststoff, mit einer Nut auf der Umfangsfläche. Bei dem Rotor 48b handelt es sich um ein oder zwei Räder, jedenfalls mit zwei gleichen Nuten auf der Umfangsfläche. Alternativ könnte auch ein einziges Rad mit einer breiten Nut vorgesehen sein, in der Platz für zwei Mitnehmer gegeben ist.

Die Mitnehmer 50 sind bei dem Ausführungsbeispiel nach den Figuren 3a und 3b als O-Ringe ausgebildet, die um die Rotoren 48a, 48b geschlungen und in den Nuten aufgenommen werden. In der aufgelegten Stellung nehmen sie eine mehr oder weniger ovale Ausrichtung auf und sind so stark gespannt, daß sie sicher von dem Rotor 48b mitgenommen werden. Die Oberfläche der Mitnehmer 50 weist eine hohe Mitnahmekraft auf, die z. B. durch eine Gummierung, Profilierung oder dergleichen erreicht werden kann. Beide Mitnehmer 50 sind einenends auf den angetriebenen Rotor 48b und anderenends auf den nur umlenkenden Rotor 48a aufgelegt. Demzufolge sind ihre Bewegungen voneinander abhängig. Wie sich aus der Sicht auf Figur 3a oder 3b ergibt, verlaufen die einander zugewandten Trume der Mitnehmer 50 in entgegengesetzter Richtung, sobald die beiden Halter 46 unter einem spitzen Winkel zueinander verlaufen. Alternativ könnte auch ein einziger Mitnehmer 50 vorgesehen werden, der in der Art einer "8" oder spiralartig um alle Rotoren 48 gelegt wird.

Der Motor 52 ist in diesem Ausführungsbeispiel als ein einfacher Elektromotor ausgebildet, der über einen Schaltkreis angesteuert werden kann. Ein Betrieb des Motors 52 soll dann erfolgen, wenn die Stränge 42 am Ende des Bindevorgangs nahe der Stirnseite des Preßerzeugnisses 40 aufgelegt werden. Je nach der Ausführung der Bindevorrichtung 32 kann der Bindevorgang auch an beiden Stirnseiten oder zwischen diesen beendet werden. Zur Steuerung des Motors 52 können z. B. Kontaktschalter für einen Schaltkreis vorgesehen werden, die von der Bindemittelführung 34 geschlossen und von der Schneidvorrichtung 36 geöffnet werden. Alternativ kann der Motor 52 über ein Zeitrelais geschaltet werden.

Der Aufnahmeraum 58 ergibt sich zwischen den einander zugelegenen Trumen der Mitnehmer 50 und weist z. B. unter einem rechten Winkel zueinander verlaufende Seitenkanten auf, nämlich die Trume - sh. Fig. 3a. Darüber hinaus sind auch andere Winkel denkbar, solange eine Führung der Stränge 42 gewährleistet wird. Als vorteilhaft wird jedoch ein Winkel von 60 Grad ± 30 Grad angesehen. Die in Figur 3a gezeigte Stellung wird als Aufnahme- oder Öffnungsstellung bezeichnet, weil die Trume soweit auseinander liegen, daß die beiden Stränge 42 problemlos aufgenommen werden können. In der Stellung nach Figur 3b verlaufen die Trume unter einem spitzen Winkel zueinander, so daß der Aufnahmeraum 58 die Form eines "V" einnimmt.

Die Veränderung der Form des Aufnahmeraums 58 ist deshalb möglich, weil wenigstens ein Halter 46 auf der Achse 54 schwenkbar gelagert ist. Auf nicht gezeigte Weise könnten die Halter 46 aufeinander zu oder voneinander weg vorgespannt sein. Die Verstellung der Halter 46 kann durch eine Kulissenführung, durch Stellhebel oder dergleichen hervorgerufen werden, was jedoch im einzelnen nicht gezeigt ist.

Da die Stränge 42 fest gespannt sind, liegen sie fest an den Mitnehmern 50 an und können nicht aus dem Aufnahmeraum 58 entweichen.

Nach alledem ergibt sich folgende Funktion der Verdrehvorrichtung 38.

Am Ende des Bindevorgangs bewegt sich die Bindemittelführung 34 zu der in Figur 2 gezeigten Stellung, in der beide Stränge 42 aneinander anliegen oder sich in unmittelbarer Nachbarschaft befinden. Die Bindemittelführung 34 betätigt während ihrer Bewegung einen Schalter zum Einschalten des Motors 52 und führt die Stränge 42 sowohl in die Schneidvorrichtung 36 als auch in den Aufnahmeraum 58. Der laufende Motor 52 bewegt zugleich die Mitnehmer 50, die sich gemäß der Figuren 3a und 3b in entgegengesetzten Richtungen bewegen. Die Stränge 42, die nunmehr reibschlüssig an den Mitnehmern 50 anliegen, werden von diesen um eine gemeinsame Achse verdreht. Dieser Verdrehvorgang erfolgt z. B. solange, bis das Preßerzeugnis 40 von einem verdrillten Strang vollständig, d. h. wenigstens einmal umgeben ist. Während die Stränge 42 sich zunehmend zur Stirnfläche des Preßerzeugnisses 40 bewegen, schwenken die Mitnehmer 50 aufeinander zu und geben dem Aufnahmeraum 58 eine im wesentlichen V-förmige Gestalt, so daß die Stränge 42 noch besser gepackt werden. Sobald die gewünschte Umschlingungszahl des Preßerzeugnisses 40 erreicht ist, wird die Schneidvorrichtung 36 betätigt, was zunächst zu einer Erhöhung der Spannung in den Strängen 42 führt, wodurch diese zwischen die bereits aufgelegten Stränge 42 eingeklemmt werden. Schließlich werden die beiden miteinander verdrillten Stränge 42 getrennt und der Bindevorgang ist beendet. Infolge der Betätigung der Schneidvorrichtung 38 oder durch Zeitablauf wird der Betrieb des Motors 52 eingestellt.

Die beiden miteinander verdrillten Stränge 42 weisen gemeinsam die Form einer "8" auf und sind somit nicht rund. Aufgrund dieser Formgebung bleiben sie zwischen den bereits aufgelegten Strängen 42 und/oder in dem Preßgut haften und können sich nicht lösen.

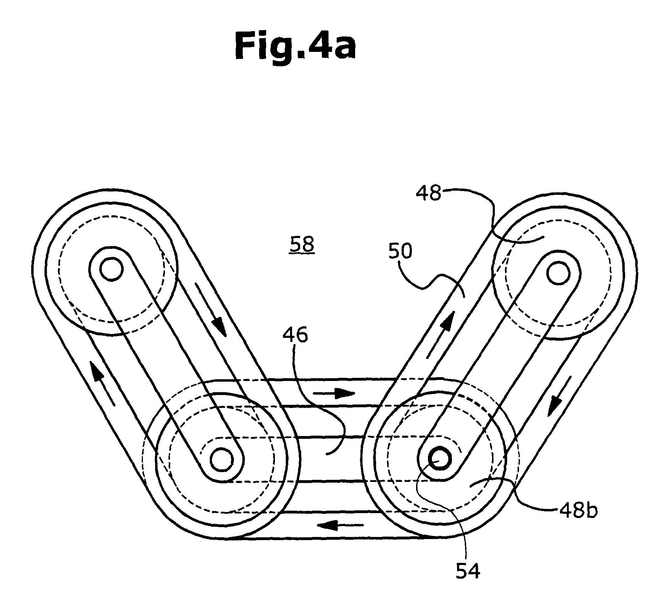

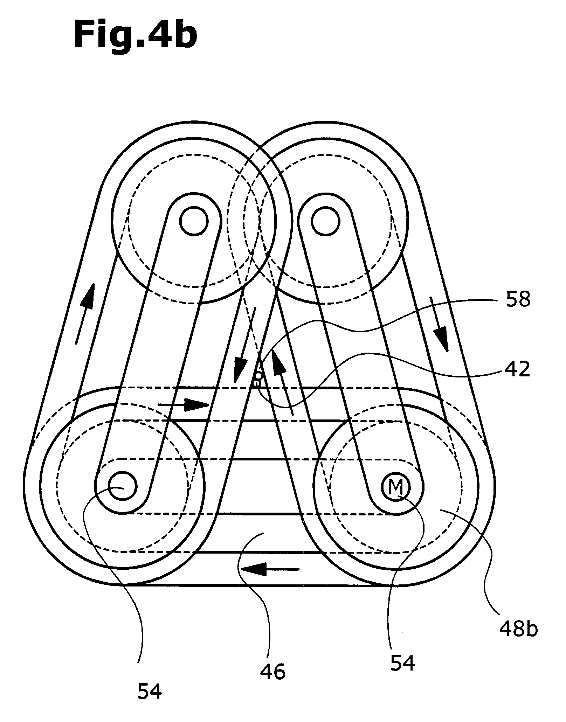

Im folgenden wird auf das in den Figuren 4a, 4b Gezeigte Bezug genommen, bei dem es sich um das zweite Ausführungsbeispiel handelt.

Das zweite Ausführungsbeispiel unterscheidet sich von dem ersten dadurch, daß nicht ein mittlerer und angetriebener Rotor 48b mit zwei Nuten, sondern zwei Rotoren 48b mit zwei Nuten vorgesehen sind, die über einen dritten Mitnehmer 50 drehfest miteinander in Verbindung stehen und auf einem weiteren Halter 46 drehbar gelagert sind. Die bereits vorhandenen Halter 46 sind auf den Achsen 54 dieser beiden Rotoren 48b in den Endbereichen des dritten Halters 46 schwenkbar gelagert. Im Gegensatz zu dem ersten Ausführungsbeispiel weist der Aufnahmeraum 58 folglich keine "V"-förmige sondern eine "U"-förmige Form auf. Die äußeren Mitnehmer 50 können auf den Achsen 54 der Rotoren 48b geschwenkt werden und ausgehend von einer geöffneten Stellung nach Figur 4a eine Stellung gemäß Figur 4b einnehmen, in der sich im wesentlichen ein Dreieck ergibt, das einen Innenraum enthält, dessen Seiten von sich bewegenden Trumen der Mitnehmer 50 gebildet wird. Insbesondere mit Blick auf Figur 4b wird deutlich, daß die Stränge 42 reibfest an den Mitnehmern 50 anliegen und sicher miteinander verdrillt werden. In einer Fortentwicklung des gezeigten zweiten Ausführungsbeispiels könnten auch vier Halter 46 vorgesehen werden.

Die Funktion dieser Verdrehvorrichtung 38 entspricht im übrigen der des ersten Ausführungsbeispiels.

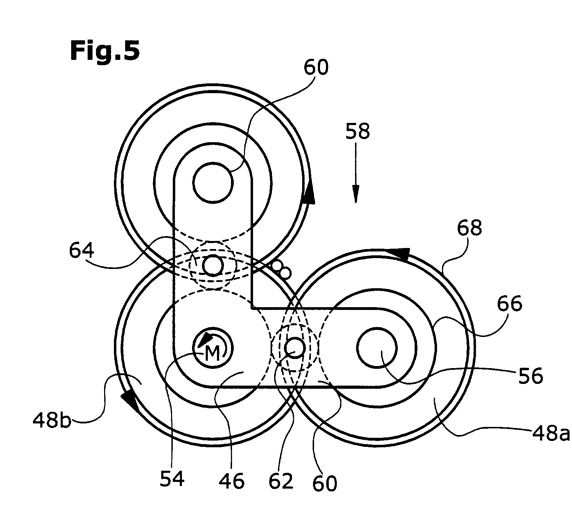

Figur 5 stellt ein drittes Ausführungsbeispiel der Erfindung dar.

Bei diesem Ausführungsbeispiel ist nur ein Halter 46 vorgesehen, der zwei unter einem rechten Winkel verlaufende Schenkel 60 enthält, die in diesem Ausführungsbeispiel miteinander unbeweglich verbunden sind. Der Winkel könnte je nach der Größe der gewählten Rotoren 48 auch größer oder kleiner gewählt werden. Alternativ könnten auch diese Schenkel 60 wie die Halter 46 nach den vorherigen Ausführungsbeispielen beweglich ausgebildet werden. An den freien Enden der Schenkel 60 sind die Achsen 56 gelagert, in deren Kreuzungsbereich die Achse 54. Mittig zwischen diesen Achsen 54, 56 sind zudem Achsen 62 für Umkehrrotoren 64 vorgesehen.

Die Rotoren 48 sind mit gleichem Außendurchmesser ausgebildet und gliedern sich in einen Fuß 66 und einen Kopf 68, wobei der Fuß 66 einen geringeren Durchmesser aufweist als der Kopf 68.

Eine Ausbildung mit unterschiedlichen Außendurchmessern wäre ebenfalls möglich. Insgesamt nehmen die Rotoren 48 im wesentlichen die Form eines Pilzes ein.

Die Rotoren 48 sind so angeordnet, daß sich ein angetriebener Rotor 48b mittig zwischen den beiden nicht angetriebenen und in den Endbereichen der Schenkel 60 gelagerten Rotoren 48a befindet. In der montierten Stellung überlappen sich die Umfangslinien benachbarter Rotoren 48 in deren Kopfbereich. Zwischen den Füßen 66 benachbarter Rotoren 48 sind die Umkehrrotoren 64 angeordnet, und zwar in der Art eines Stirnradgetriebes in Reibradtechnik. In jedem Schenkel 60 sind somit aufeinanderfolgend ein nicht angetriebener Rotor 48a, ein Umkehrrotor 64 und ein angetriebener Rotor 48b drehbar auf Achsen 56, 62 bzw. 54 gelagert. Die Dimensionierung der Rotoren 48 und der Schenkel 60 ist so gewählt, daß die beiden außenliegenden Rotoren 48a in dem Bereich ihrer Köpfe 68 einen Abstand zueinander aufweisen, der von einem Teil der Umfangsfläche des dazwischenliegenden Rotors 48b überbrückt wird, so daß sich ein Aufnahmeraum 58 ergibt, in dem die beiden Stränge 42 aufgenommen werden können.

Abweichend von der bisherigen Beschreibung könnte auch einer der äußeren Rotoren 48a angetrieben werden.

Mit Blick auf Figur 5 wird deutlich, daß aufgrund der Anordnung der Rotoren 48 und der Umkehrrotoren 64 auf den Umfangsseiten der Köpfe 68 aufliegende Stränge 42 miteinander verdrillt werden.

## Patentansprüche

1. Bindevorrichtung (32) einer Presse (10) mit einer Bindemittelquelle, von der aus wenigstens zwei Stränge (42) Bindemittel (44) zu einem Preßerzeugnis (40) in der Presse (10) geführt werden, **dadurch gekennzeichnet, daß** die Stränge (42) vor der Auflage auf das Preßerzeugnis (24) miteinander verdreht werden.

2. Bindevorrichtung nach Anspruch 1, **dadurch gekennzeichnet, daß** eine antreibbare Verdrehvorrichtung (38) zwischen dem Preßraum (24) und einer Bindemittelführung (34) vorgesehen ist.

3. Bindevorrichtung nach Anspruch 1 oder 2, **dadurch gekennzeichnet, daß** die Verdrehvorrichtung (38) nur zeitweise angetrieben wird.

4. Bindevorrichtung nach einem oder mehreren der vorherigen Ansprüche, **dadurch gekennzeichnet, daß** die Verdrehvorrichtung (38) gegenläufig angetriebene Mitnehmer (50) aufweist.

5. Bindevorrichtung nach einem oder mehreren der vorherigen Ansprüche, **dadurch gekennzeichnet, daß** die Verdrehvorrichtung (38) relativ zueinander verstellbare Mitnehmer (50) aufweist.

6. Bindevorrichtung nach einem oder mehreren der vorherigen Ansprüche, **dadurch gekennzeichnet, daß** die Mitnehmer (50) motorisch, insbesondere elektromotorisch, antreibbar sind.

7. Bindevorrichtung nach einem oder mehreren der vorherigen Ansprüche, **dadurch gekennzeichnet, daß** die Mitnehmer (50) Riemen, Schnüre, Ringe oder Rollen mit einer erhöhten Oberflächenreibung sind.

8. Bindevorrichtung nach einem oder mehreren der vorherigen Ansprüche, **dadurch gekennzeichnet, daß** die Mitnehmer (50) über ein Getriebe untereinander in Verbindung stehen.

9. Bindevorrichtung nach einem oder mehreren der vorherigen Ansprüche, **dadurch gekennzeichnet, daß** zwei als Riemen, Schnüre oder Ringe ausgebildete Mitnehmer (50) um einen gemeinsamen antreibenden Rotor (48b) geschlungen sind.

10. Bindevorrichtung nach einem oder mehreren der vorherigen Ansprüche, **dadurch gekennzeichnet, daß** zwei insbesondere als Rollen ausgebildete Mitnehmer (50) drehbar in einem Halter (46) gelagert sind, zwischen sich einen Abstand zur Bildung eines Aufnahmeraums (58) belassen und ein weiterer Mitnehmer (50) den Aufnahmeraum (58) einerseits begrenzt.

11. Bindevorrichtung nach einem oder mehreren der vorherigen Ansprüche, **dadurch gekennzeichnet, daß** der Antrieb der Verdrehvorrichtung (38) von dem laufenden Bindemittel (44) abgenommen und mittels einer biegsamen Welle auf die Verdrehvorrichtung übertragen wird.

12. Rundballenpressen mit einer Bindevorrichtung nach einem oder mehreren der vorherigen Ansprüche, **dadurch gekennzeichnet, daß** die Verdrehvorrichtung (38) zwischen der Bindemittelführung (34) und einer Schneidvorrichtung (36) oder zwischen der Schneidvorrichtung 36 und einem Preßraum 24 der Presse 10 vorgesehen ist.
